# EUROPEAN PATENT APPLICATION

(11) **EP 2 868 784 A1**
(43) Date of publication of application: **06.05.2015**
(21) Application number: 13808822.4
(22) Date of filing: 12.04.2013
(51) Int. Cl.: D01F 9/08

(54) **HEAT-RESISTANT INORGANIC FIBER**

(30) Priority: 29.06.2012 JP 2012147286; 27.09.2012 US 201261706348 P
(71) Applicant: Nichias Corporation, Tokyo 104-8555 (JP)
(72) Inventor: IWATA, Koji, Tokyo 104-8555 (JP); KITAHARA, Hideki, Tokyo 104-8555 (JP); MOCHIDA, Takahito, Tokyo 104-8555 (JP); ISHIKAWA, Yoichi, Tokyo 104-8555 (JP); MIKI, Tatsuro, Tokyo 104-8555 (JP); YONAIYAMA, Ken, Tokyo 104-8555 (JP)
(74) Representative: Schmitz, Joseph
(86) International application number: PCT/JP2013/002506
(87) International publication number: WO 2014/002344

(57) **Abstract**

Inorganic fibers which contain Na₂O, SiO₂ and Al₂O₃ as main components and do not react with alumina at 600°C.

## Description

### Technical Field

The invention relates to bio-soluble inorganic fibers having excellent heat resistance.

### Background Art

Asbestos have been used as a heat-resistant sealing material, for example, since it is light in weight and has excellent heat resistance. However, use of asbestos is inhibited since it causes disorders of lungs. Therefore, instead of asbestos, ceramic fibers or the like have been used. It is thought that, ceramic fibers or the like have excellent heat resistance which is equivalent to that of asbestos, and no health problem may occur as long as it is handled appropriately. However, there is a trend that a higher degree of safety is required. Under such circumstances, various bio-soluble fibers have been developed in order to realize bio-soluble fibers which do not cause or hardly causes health problems even if it is inhaled in a human body (see Patent Documents 1 and 2, for example).

Most of commercially-available bio-soluble fibers have a high degree of solubility in physiological saline of pH 7.4. On the other hand, it is known that when fibers are inhaled in the lung, they are captured by macrophages. At the same time, it is known that the pH around macrophages is 4.5. Therefore, it is expected that the fibers having high solubility in physiological saline having pH of 4.5 are dissolved and decomposed in the lungs.

In addition, like asbestos, conventional inorganic fibers are secondary processed into a shaped product or an unshaped product together with various binders or additives, and are used as a joint in a heat treating apparatus, a furnace such as an industrial furnace, an incinerator or the like, a joint which fills the gap of a refractory tile, an insulating brick, a shell, and a refractory mortar, a sealing material, a packing material, a cushion material, an insulating material, or the like. In many cases, the inorganic fibers are exposed to high temperatures, and they are required to have heat resistance.

Further, in many cases, alumina is used as elements in a furnace. There was a problem that fibers contained in a secondary-processed product react with the alumina, thereby causing the secondary product or the element to adhere and melt.

### Related Art Documents

### Patent Documents

Patent Document 1: Japanese Patent No. 3753416
Patent Document 2: JP-T-2005-514318

### Summary of the Invention

An object of the invention is to provide novel bio-soluble inorganic fibers having heat resistance.

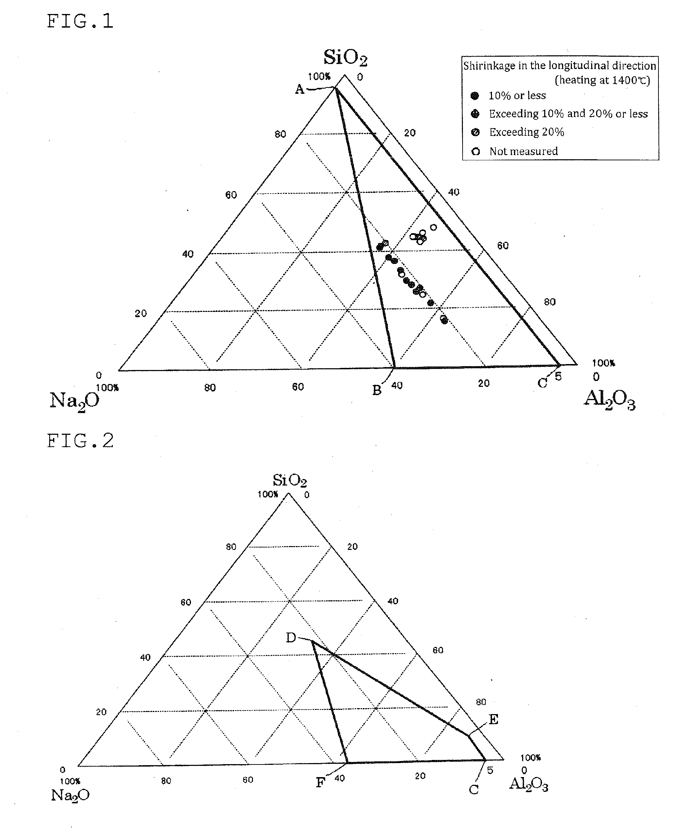

According to the invention, the following inorganic fibers or the like are provided.
1. Inorganic fibers which comprise Na₂O, SiO₂ and Al₂O₃ as main components and do not react with alumina at 600°C.
2. Inorganic fibers comprising the composition in the range surrounded by the following points A, B and C in the state diagram of Na₂O-SiO₂-Al₂O₃ shown in FIG. 1, wherein
   Na₂O, SiO₂ and Al₂O₃ are contained as the main components when Na₂O, SiO₂ and Al₂O₃ are contained;
   Na₂O and SiO₂ are contained as the main components when Na₂O and SiO₂ are contained and no Al₂O₃ is contained;
   Na₂O and Al₂O₃ are contained as the main components when Na₂O and Al₂O₃ are contained and no SiO₂ is contained; and
   Na₂O + SiO₂ + Al₂O₃ ≧ 80 wt%
   Point A: (Na₂O: SiO₂: Al₂O₃ = 5:95:0)
   Point B: (Na₂O: SiO₂: Al₂O₃ = 40:0:60)
   Point C: (Na₂O: SiO₂: Al₂O₃ = 5:0:95).
3. Inorganic fibers having the following composition, wherein:
   Na₂O, SiO₂ and Al₂O₃ are contained as the main components when Na₂O, SiO₂ and Al₂O₃ are contained;
   Na₂O and Al₂O₃ are contained as the main components when Na₂O and Al₂O₃ are contained and no SiO₂ is contained; and
   Na₂O and SiO₂ are contained as the main components when Na₂O and SiO₂ are contained and no Al₂O₃ is contained;
   Na₂O: 5 to 50 wt%;
   SiO₂: 0 to 95 wt%;
   Al₂O₃: 0 to 95 wt%; and
   Na₂O + SiO₂ + Al₂O₃ ≧ 80 wt%.
4. The inorganic fibers according to 3, which have the following composition:
   Na₂O: 5 to 40 wt%;
   SiO₂: 0 to 75 wt%; and
   Al₂O₃: 20 to 95 wt%.
5. The inorganic fibers according to 3, which have the following composition:
   Na₂O: 10 to 40 wt%;
   SiO₂: 0 to 58 wt%; and
   Al₂O₃: 32 to 90 wt%.
6. The inorganic fibers according to claim 4, which have the following composition:
   Na₂O: 15 to 38 wt%;
   SiO₂: 0 to 51 wt%; and
   Al₂O₃: 34 to 85 wt%.
7. Inorganic fibers comprising the composition in the range surrounded by the following points D, F, C and E in the state view of Na₂O-SiO₂-Al₂O₃ shown in FIG. 2, wherein
   Na₂O, SiO₂ and Al₂O₃ are contained as the main components when Na₂O, SiO₂ and Al₂O₃ are contained;
   Na₂O and Al₂O₃ are contained as the main components when Na₂O and Al₂O₃ are contained and no SiO₂ is contained; and
   Na₂O + SiO₂ + Al₂O₃ ≧ 80 wt%
   Point D: (Na₂O: SiO₂: Al₂O₃ = 23:45:32)
   Point F: (Na₂O: SiO₂: Al₂O₃ = 38:0:62)
   Point C: (Na₂O: SiO₂: Al₂O₃ = 5:0:95)
   Point E: (Na₂O: SiO₂:Al₂O₃ = 5:10:85).
8. The inorganic fibers according to any of 1 to 7, wherein the amount of SiO₂ is 25 wt% or less.
9. The inorganic fibers according to any of 1 to 7, wherein the amount of SiO₂ is 28.5 wt% to 45.0 wt%.
10. The inorganic fibers according to any of 1 to 9, wherein the amount of Na₂O is 15 wt% to 30 wt%.
11. The inorganic fibers according to 10, wherein the amount of Na₂O is 18 wt% to 28 wt%.
12. The inorganic fibers according to any of 1 to 11, wherein the amount of Al₂O₃ is 80 wt% or less.
13. The inorganic fibers according to 12, wherein the amount of Al₂O₃ is 70 wt% or less.
14. A method for producing the inorganic fibers according to any of 1 to 13, wherein the inorganic fibers are produced by the fusion method.

According to the invention, it is possible to provide novel bio-soluble inorganic fibers having heat resistance.

### Brief Description of the Drawings

FIG. 1 is a state diagram of Na₂O-SiO₂-Al₂O₃ exhibiting the preferable fiber composition of the invention and the composition of the fibers according to Examples 1 to 30; and
FIG. 2 is a state diagram of Na₂O-SiO₂-Al₂O₃ exhibiting the preferable fiber composition of the invention.

### Mode for Carrying out the Invention

The first inorganic fibers of the invention contain the three components, i.e. Na₂O, SiO₂ and Al₂O₃, as the main components. The inorganic fibers are bio-soluble since they contain Na₂O.

The "as the main components" mean that, of the all components contained in the inorganic fibers, the three components which have the largest content (wt%) are Na₂O, SiO₂ and Al₂O₃.

The first inorganic fibers do not react with alumina at least at 600°C. The "do not react with alumina" means that, when measurement is conducted in the method described in the Examples, alumina pellets do not adhere to a fleece or a blanket produced from the fibers.

The second inorganic fibers of the invention have a composition in the range surrounded by the following points A, B and C in the state diagram of Na₂O-SiO₂-Al₂O₃ shown in FIG. 1. When Na₂O, SiO₂ and Al₂O₃ are contained, Na₂O, SiO₂ and Al₂O₃ are contained as the main components. When Na₂O and SiO₂ are contained and no Al₂O₃ is contained, Na₂O and SiO₂ are contained as main components. When Na₂O and Al₂O₃ are contained and no SiO₂ is contained, Na₂O and Al₂O₃ are contained as the main components. In the invention, the main components mean that, of the all components contained in the inorganic fibers, the three or two components which have the largest content (wt%). Na₂O + SiO₂ + Al₂O₃ ≧ 80 wt%
Point A: (Na₂O: SiO₂: Al₂O₃ = 5:95:0)
Point B: (Na₂O: SiO₂: Al₂O₃ = 40:0:60)
Point C: (Na₂O: SiO₂: Al₂O₃ = 5:0:95)

The second inorganic fibers have excellent heat resistance at 1,000°C and have excellent alumina resistance.

The third inorganic fibers have the following composition. When Na₂O, SiO₂ and Al₂O₃ are contained, Na₂O, SiO₂ and Al₂O₃ are contained as the main components. When Na₂O and Al₂O₃ are contained and no SiO₂ is contained, Na₂O and Al₂O₃ are contained as the main components. When Na₂O and SiO₂ are contained and no Al₂O₃ is contained, Na₂O and SiO₂ are contained as the main components.
Na₂O: 5 to 50 wt%;
SiO₂: 0 to 95 wt%;
Al₂O₃: 0 to 95 wt%; and
Na₂O + SiO₂ + Al₂O₃ ≧ 80 wt%

As for the third inorganic fibers, the inorganic fibers having the following composition are preferable.
Na₂O: 5 to 40 wt%;
SiO₂: 0 to 75 wt%; and
Al₂O₃: 20 to 95 wt%

The inorganic fibers having the following composition are more preferable.
Na₂O: 10 to 40 wt%;
SiO₂: 0 to 58 wt%; and
Al₂O₃: 32 to 90 wt%

The inorganic fibers having the following composition are further more preferable.
Na₂O: 15 to 38 wt%;
SiO₂: 0 to 51 wt%; and
Al₂O₃: 34 to 85 wt%

The fourth inorganic fibers of the invention have a composition in the range surrounded by the following points D, F, C and E in the Na₂O-SiO₂-Al₂O₃ state diagram shown in FIG. 2. When Na₂O, SiO₂ and Al₂O₃ are contained, Na₂O, SiO₂ and Al₂O₃ are contained as the main components. When Na₂O and Al₂O₃ are contained and no SiO₂ is contained, Na₂O and Al₂O₃ are contained as main components. Na₂O + SiO₂ + Al₂O₃ ≧ 80 wt%
Point D: (Na₂O: SiO₂: Al₂O₃ = 23:45:32)
Point F: (Na₂O: SiO₂: Al₂O₃ = 38:0:62)
Point C: (Na₂O: SiO₂: Al₂O₃ = 5:0:95)
Point E: (Na₂O: SiO₂: Al₂O₃ = 5:10:85)

The first to fourth inorganic fibers (hereinafter, referred to as the "inorganic fibers of the invention") as mentioned above, it is preferred that three components, i.e. Na₂O, SiO₂ and Al₂O₃, be contained. In the first to fourth inorganic fibers, the amount of each component can be appropriately combined.

In the second to fourth inorganic fibers of the invention, SiO₂ may not be contained. In the inorganic fibers of the invention, when SiO₂ is contained, the amount thereof is 0.1 wt% or more, 0.3 wt% or more, 0.5 wt% or more, 1.0 wt% or more, 5 wt% or more, 10 wt% or more and 12 wt% or more. The amount of SiO₂ is preferably 5 wt% or more, with 15 wt% or more being more preferable. Further, the amount of SiO₂ can be 50 wt% or less, 45 wt% or less, 42.5 wt% or less or 25 wt% or less. For example, the amount of SiO₂ can be 28.5 wt% to 45.0 wt%, or 28.5 wt% to 42.5 wt%.

In the inorganic fibers of the invention, the amount of Na₂O is preferably 5 wt% or more. The amount of Na₂O is 10 wt% to 40 wt%, preferably 15 wt% to 30 wt%, more preferably 18 wt% to 30 wt%, 18 wt% to 28 wt% or 18 wt% to 25 wt%.

In the second and third inorganic fibers of the invention, Al₂O₃ may not be contained. In the inorganic fibers of the invention, when Al₂O₃ is contained, the amount thereof is preferably 5 wt% or more, more preferably 20 wt% or more, 30 wt% or more, 32 wt% or more and 35 wt% or more. The amount of Al₂O₃ is preferably 80 wt% or less, more preferably 70 wt% or less, with 67 wt% or less being further preferable.

The total of Na₂O, SiO₂ and Al₂O₃ may be 85 wt% or more, 90 wt% or more, 93 wt% or more, 95 wt% or more, 98 wt% or more, 99 wt% or more or 100 wt% (however, impurities which have been inevitably mixed in may be contained).

The rest other than specific components are an oxide of other elements, impurities of the like.

The inorganic fibers of the invention may or may not contain an oxide of a metal selected from Sc, La, Ce, Pr, Nd, Sm, Eu, Gd, Tb, Dy, Ho, Er, Tm, Yb, Lu, Y or a mixture thereof. The amount of these oxides may be 5 wt% or less, 3 wt% or less, 2 wt% or less, 1 wt% or less or 0.5 wt% or less.

The alkaline metal oxide (K₂O, Li₂O or the like) other than Na₂O may or may not be contained. The amount thereof can be, independently or in total, less than 12 mol%, 5 wt% or less, 3 wt% or less, 2 wt% or less, 1 wt% or less or 0.5 wt% or less.

Each of TiO₂, ZnO, B₂O₃, P₂O₅, MgO, CaO, SrO, BaO, Cr₂O₃, ZrO₂ and Fe₂O₃ may or may not be contained. The amount thereof can be 20 wt% or less, 18 wt% or less, 15 wt% or less, 10 wt% or less, 7 wt% or less, 5 wt% or less, 3 wt% or less, 2 wt% or less, 1 wt% or less or 0.5 wt% or less.

Each of non-oxide-based materials such as a carbonate or a nitride may be contained. The amount thereof may be 20 wt% or less, 18 wt% or less, 15 wt% or less, 10 wt% or less, 7 wt% or less, 5 wt% or less, 3 wt% or less, 2 wt% or less, 1 wt% or less or 0.5 wt% or less. The atmosphere at the time of melting may be an inert atmosphere or a reductive atmosphere.

The inorganic fibers of the invention normally do not contain the following materials. If they are contained, the amount thereof is 1.0 wt% or less, 0.5 wt% or less, 0.2 wt% or less or 0.1 wt% or less.

Examples thereof include germanium oxide, tellurium oxide, vanadium oxide, sulfur oxide, phosphor compounds, tin, cobalt, manganese oxide, fluoride and copper oxide.

The inorganic fibers can be produced by a known method such as a fusion method, a sol-gel method or the like. In respect of a low cost, a fusion method is preferable. In the fusion method, fibers are prepared by preparing a molten product of a raw material in the customary manner, and allowing the molten product to be fibrous. For example, fibers can be prepared by a spinning method in which a molten product is flown onto a wheel which is rotating at a high speed, by a blowing method in which a molten raw material is exposed to compressed air or the like.

The average fiber diameter of the inorganic fibers of the invention is normally 0.1 to 50 µm, preferably, 0.5 to 20 µm, further preferably 1 to 10 µm, and most preferably 1 to 8 µm. The average fiber diameter may be adjusted to be an intended value by a known method such as the number of rotation, acceleration, compressed air pressure, wind, velocity, air flow or the like.

The fibers may or may not be coated by a known coating material. It may be covered by a surface treatment agent such as a surfactant, a sizing agent, a chelating agent, an anti-rust agent, a repellent and an inorganic component (see paragraphs [0024] to [0026] above).

The inorganic fibers of the invention may or may not be subjected to a heat treatment.

If a heat treatment is conducted, it suffices that the temperature is a temperature at which the fiber shape be retained. Since the physical properties of the fiber vary by the heating temperature and the heating time, the fibers may be treated appropriately such that desired performance (creep resistance, shrinkage, strength, elasticity) can be exhibited.

The inorganic fibers change from amorphous to crystalline by a prescribed heat treatment. As mentioned above, it suffices that desired performance is exhibited. The inorganic fibers may be either amorphous or crystalline, or may be a state in which an amorphous part and a crystalline part are mixed.

The heating temperature is, for example, 100°C or more, 300°C or more, preferably 600°C or more, 800°C or more, further preferably 1000°C or more, 1200°C or more, 1300°C or more, or 1400°C or more. The heating temperature is preferably 600°C to 1400°C, further preferably 800°C to 1200°C, 800°C to 1000°C.

By having the above-mentioned composition, the inorganic fibers of the invention are dissolved in physiological saline having a pH of 4.5 or a pH of 7.4. Further, they have solubility after heating (after crystallizing).

The solubility of the inorganic fibers in physiological saline having a pH of 4.5 or 7.4 is, by a measurement method in the Examples, preferably 2.0 mg/g or more, more preferably 4.0 mg/g or more, further preferably 6.3 mg/g or more. Having biosolubility means that having solubility of 1.0 mg/g or more in physiological saline having a pH of 4.5.

The solubility of the fibers can also be measured by the following method.

The fibers are placed on a membrane filter. On the fibers, physiological saline having a pH of 4.5 or 7.4 is added dropwise from a micro pump. The filtrate which has passed through the fibers and the filter is collected in a container. The collected filtrate is taken out after the passage of 24 hours and 48 hours. The eluent component is quantified by an ICP emission analyzer to calculate the solubility and the dissolution rate constant. The elements to be measured are allowed to be three elements, i.e. Al, Si and Na as main elements, for example. It is possible to measure the fiber diameter and to convert the dissolution rate constant (unit: ng/cm² · h), which is the eluent amount per unit surface area and per unit time.

The dissolution velocity constant is preferably 10 ng/cm² · h or more, 30 ng/cm² · h or more, 50 ng/cm² · h or more, 100 ng/cm² · h or more, 150 ng/cm² · h or more, 200 ng/cm² · h or more, 300 ng/cm² · h or more, 500 ng/cm² · h or more, 1,000 ng/cm² · h or more, and 1,500 ng/cm² · h or more.

It is preferred that the inorganic fibers of the invention have low alumina reactivity. Having alumina reactivity means that, by the method in the Examples, the fibers are preferably not molten, further preferably are neither molten nor adhered.

The inorganic fibers of the invention preferably have heat resistance at 600°C or more, 800°C or more, 1000°C or more, 1100°C or more, 1200°C or more, 1300°C or more and 1400°C or more. Specifically, the fibers have a volume shrinkage (%), which is obtained by heating a columnar sample having a diameter of about 7 mm and a height of about 15 mm for 8 hours at a specific temperature of 800 to 1400°C, of preferably 35% or less, more preferably 20% or less, and most preferably 10% or less when heated at 1400°C for 8 hours. The volume shrinkage is preferably 35% or less, more preferably 20% or less, and most preferably 10% or less, when heated at 1300°C for 8 hours,. The volume shrinkage is preferably 35% or less, more preferably 20% or less, and most preferably 10% or less when heated at 1200°C for 8 hours. The volume shrinkage is preferably 35% or less, more preferably 20% or less, and most preferably 10% or less when heated at 1100°C for 8 hours. The volume shrinkage is preferably 35% or less, more preferably 20% or less, and most preferably 10% or less when heated at 1000°C for 8 hours. The volume shrinkage is preferably 35% or less, more preferably 20% or less, and most preferably 10% or less when heated at 800°C for 8 hours.

The heat shrinkage of the fibers can be measured before and after the 8-hour firing at a specific temperature of 600°C to 1600°C for 8 hours of a fleece or a blanket produced from the fibers. To the surface of each sample thus produced, two or more platinum pins are nailed. The distance between these platinum pins was measured before and after the heating, and the change in dimension is taken as the heat shrinkage.

The heat shrinkage is preferably 50% or less, 45% or less, 40% or less, 35% or less, 30% or less, 25% or less, 20% or less, 15% or less, further preferably 10% or less, 8% or less, most preferably 5% or less, 3% or less and 1 % or less at each temperature (600°C, 800°C, 1000°C, 1100°C, 1200°C, 1300°C, 1400°C, 1500°C, 1600°C).

Further, the number of kind of the essential components of the inorganic fibers of the invention can be small. Therefore, the number of mixing steps is decreased, leading to reduction in cost. Further, the small number of kind of components leads to relaxation of production difficulty when adjusting slightly the mixing amount.

From the fibers of the invention, a shaped product such as bulk, blanket, block, rope, yarn, text fabrics, fibers coated with a surfactant, shot-less bulk from which shot (un-fibrous product) has been reduced or removed, a board produced by using a solvent such as water, a mold, paper, felt, wet felt impregnated with colloidal silica, or the like can be obtained. Further, a shaped product obtained by treating these shaped products with colloid or the like can be obtained. Further, an unshaped product (mastic, caster, coating or the like) produced by using a solvent such as water can be obtained.

In addition, a structural body obtained by combining the shaped product, the unshaped produced and various heating bodies can be obtained.

As specific applications of the fibers of the invention, a heat treating apparatus, a joint in a furnace such as an industrial furnace, an incinerator or the like, a joint which fills the gap of a refractory tile, an insulating brick, a shell, and a refractory mortar, a sealing material, a packing material, a cushion material, an insulating material, a refractory material, a fire proofing material, a heat-retention material, a protective material, a coating material, a filtering material, a filter material, an insulating material, a joint, a filler, a repairing material, a heat insulating material, a non-combustible material, a sound proof material, a sound absorbing material, a friction material (an additive for brake pad, for example), a glass plate/steel plate conveying roll, an automobile catalyst carrier retaining material, various fiber-reinforced composite materials (reinforcing fibers such as fiber-reinforced cement, fiber-reinforced plastics, or the like, reinforcing fibers such as a heat insulating material or a refractory material, an adhesive, a coating material or the like) can be given.

### EXAMPLES

### Examples 1 to 196 and Comparative Example 1

The fibers having the composition shown in Table 1 were prepared by the fusion method. Studies were made on heat resistance and alumina reactivity by the following method. The results are shown in Table 1.

The compositions in Examples 4, 11, 19, 33, 40, 41, 47, 51, 54, 58, 59, 62, 63, 76, 77, 87, 93, 94, 102, 107, 111, 124, 143, 149, 158, 161, 168, 176, 180 and 190 are shown in FIG. 1.

### (Heat resistance)

The heat shrinkage was measured to evaluate the heat resistance of the fibers.

The heat shrinkage of the fibers was measured by a method in which a fleece or a blanket (50 mm × 50 mm, thickness: 5 to 50 mm) was produced from fibers and fired for 8 hours at a specific temperature of 600°C to 1400°C.

On the surface of each sample thus produced, 2 or more platinum pins were nailed, and the distance between the platinum pins was measured before and after the heating. The change in dimension was taken as the heat shrinkage.

### (Alumina reactivity)

About 1g of alumina powder having purity of 99% or more was press-molded by means of a mold having a diameter of 17 mm to obtain pellets. These pellets were placed on a fleece or blanket-like sample (50 mm × 50 mm, thickness: 5 to 50 mm). The sample was heated to confirm the reactivity after the heating. The sample which did not react with the pellets at all are evaluated as good (○). The sample to which the pellets slightly adhered (the pellets could be peeled off easily by hands, and the pellets and the sample were not visually molten) were evaluated as fair (Δ). The sample which reacted with the pellets (the pellets and the sample were molten and adhered) were evaluated as poor (×).

### (Biosolubility)

The biosolubility of the unheated fibers and the biosolubility of the fibers after the 8-hour heating at 1400°C were measured by the following method.

The fibers were placed on a membrane filter. On the fibers, physiological saline having a pH of 4.5 or 7.4 was added dropwise from a micro pump. The filtrate which has passed through the fibers and the filter was collected in a container. The collected filter was taken out after the passage of 24 hours. The eluent component was quantified by an ICP emission analyzer to calculate the solubility. The elements to be measured were three elements, i.e. Al, Si and Na as main elements. The fiber diameter was measured and converted to the dissolution rate constant (unit: ng/cm² · h), which was the eluent amount per unit surface area and per unit time.

The average fiber diameter was measured by the following method.

After observing and photographing 400 or more fibers by an electron microscope. Thereafter, the diameter was measured for the photographed fibers, and the average value of all of the measured fibers was taken as the average fiber diameter.

### (Fibrillization facility)

Evaluation was made on fibrillization facility by the spinning method or by the blow method.

A case where the raw cotton, which was produced by any of the methods and collected by a suction chamber, was formed into a fleece was evaluated as excellent (⊚), a case where the raw cotton was formed into a fleece with many large shots being formed was evaluated as good (○), and a case where the raw cotton was formed into a fleece but was not formed into a fiber was evaluated as fair (Δ) and a case where no fibrous product was obtained was evaluated as poor (×).

### (Fiber state)

The fiber state of the fleece-like sample was evaluated by using the samples evaluated as (⊚) and (○) by the above method.

A case where handling was good in the state of a fleece was evaluated as (⊚), a case where handling was good but a large amount of shot was generated was evaluated as (○), a case where a fleece was partially torn was evaluated as (Δ), and a case where a fleece crumbled only by handling was evaluated as (x).

**Table 1-1**

| | Composition (wt%) | | | | | | | Heat shrinkage (%): each temperature × 8hr | | | | | Solubility (ng/cm2·h) | | Solubility after heating at 1400°C (ng/cm2·h) | | Alumina resistance reactivity | | | | Average fiber diameter (*µ*m) | Fibrillization facility | Fiber state |
|---|---|---|---|---|---|---|---|---|---|---|---|---|---|---|---|---|---|---|---|---|---|---|---|
| | SiO₂ | Al₂O₃ | Na₂O | MgO | CaO | Fe₂O₃ | ZrO₂ | 600°C | 800°C | 1000°C | 1200°C | 1400°C | PH4.5 | PH7.4 | PH4.5 | PH7.4 | 600°C | 1000°C | 1200°C | 1400°C | | | |
| Ex. 1 | 22.3 | 54.6 | 22.9 | | | 0.0 | | | | | | | | | | | | | | | | ⊚ | ⊚ |
| Ex. 2 | 20.0 | 60.0 | 20.0 | | | | | | | | 2.7 | 7.0 | | | | | | | | | | ⊚ | ⊚ |
| Ex. 3 | 25.0 | 52.7 | 22.2 | 0.0 | 0.0 | 0.0 | 0.0 | | 0.5 | 1.7 | 2.0 | 3.8 | 3154 | 1076 | | | ○ | ○ | ○ | ○ | 2.7 | ⊚ | ⊚ |
| Ex. 4 | 31.7 | 46.2 | 22.1 | | 0.0 | 0.0 | 0.0 | | | | | | | | | | | | | | | ⊚ | ⊚ |
| Ex. 5 | 37.0 | 37.3 | 25.6 | 0.0 | 0.0 | 0.0 | 0.0 | | | | 6.2 | 9.6 | | | | | | | | | | ⊚ | ⊚ |
| Ex. 6 | 23.5 | 52.6 | 23.9 | | | 0.0 | | | | | 1.3 | 2.6 | | | | | | | | | | ⊚ | ⊚ |
| Ex. 7 | 32.9 | 44.5 | 22.4 | | 0.0 | 0.0 | | | | | 3.0 | 3.7 | | | | | | | | | | ⊚ | ⊚ |
| Ex. 8 | 31.3 | 44.8 | 23.8 | | 0.0 | 0.0 | | | | | 1.5 | 2.3 | | | | | | | | | | ⊚ | ⊚ |
| Ex. 9 | 31.2 | 44.8 | 23.9 | | | 0.0 | | | | | | | | | | | | | | | | ⊚ | ⊚ |
| Ex. 10 | 35.7 | 41.1 | 23.1 | | | 0.0 | 0.0 | | 0.0 | 1.4 | 1.4 | 18 | | | | | | | | | | ⊚ | ⊚ |
| Ex. 11 | 21.9 | 57.3 | 20.8 | | 0.0 | 0.0 | 0.0 | | | 4.2 | | 8.2 | | | | | | | | | | ⊚ | ⊚ |
| Ex. 12 | 36.1 | 38.6 | 25.2 | 0.0 | 0.0 | 0.0 | 0.0 | | | | 6.2 | 7.7 | | | | | | | | | | ⊚ | ⊚ |
| Ex. 13 | 35.4 | 41.5 | 23.0 | | | 0.0 | | | 0.1 | 2.6 | 2.2 | 2.2 | | | | | | | | | | ⊚ | ⊚ |
| Ex. 14 | 31.7 | 34.4 | 21.5 | | | 0.1 | 12.3 | | 0.1 | 2.5 | 3.0 | 3.9 | | | | | | | | | | ⊚ | ⊚ |
| Ex. 15 | 25.2 | 54.4 | 20.4 | 0.0 | 0.0 | 0.0 | 0.0 | | | | | | | | | | | | | | | ⊚ | ⊚ |
| Ex. 16 | 38.2 | 35.8 | 25.8 | | | 0.1 | | | | | 11.8 | | | | | | | | | | | ⊚ | ⊚ |

**Table 1-2**

| | Composition (wt%) | | | | | | | Heat shrinkage (%): each temperature × 8hr | | | | | Solubility (ng/cm2·h) | | Solubility after heating at 1400°C (ng/cm2·h) | | Alumina resistance reactivity | | | | Average fiber diameter (*µ*m) | Fibrillization property | Fiber state |
|---|---|---|---|---|---|---|---|---|---|---|---|---|---|---|---|---|---|---|---|---|---|---|---|
| | SiO₂ | Al₂O₃ | Na₂O | MgO | CaO | Fe₂O₃ | ZrO₂ | 600°C | 800°C | 1000°C | 1200C | 1400°C | PH4.5 | PH7.4 | PH4.5 | PH7.4 | 600°C | 1000°C | 1200°C | 1400°C | | | |
| Ex. 17 | 38.4 | 35.6 | 25.9 | | | 0.0 | | | | | 13.4 | | | | | | | | | | | ⊚ | ⊚ |
| Ex. 18 | 39.1 | 34.6 | 26.2 | | | 0.0 | | | | | | | | | | | | | | | | ⊚ | ⊚ |
| Ex. 19 | 47.6 | 45.2 | 7.0 | | 0.2 | 0.1 | 0.0 | | | | | | | | | | | | | | | ⊚ | ⊚ |
| Ex. 20 | 22.7 | 55.0 | 22.3 | | | 0.0 | | | | | | | | | | | | | | | | ⊚ | ⊚ |
| Ex. 21 | 22.1 | 54.3 | 23.5 | | | 0.1 | | | | | | | | | | | | | | | | ⊚ | ⊚ |
| Ex. 22 | 30.9 | 52.0 | 17.0 | 0.0 | 0.0 | 0.0 | 0.0 | | | | | | | | | | | | | | | ⊚ | ⊚ |
| Ex. 23 | 25.4 | 49.9 | 24.5 | | | 0.1 | | | 0.8 | 0.6 | 0.8 | 1.8 | 3354 | 1343 | | | ○ | ○ | ○ | ○ | 3.3 | ⊚ | ⊚ |
| Ex. 24 | 26.0 | 49.3 | 24.6 | | | 0.0 | | | | | 0.9 | 2.0 | | | | | | | | | | ⊚ | ⊚ |
| Ex. 25 | 30.6 | 50.7 | 17.9 | 0.0 | | 0.1 | 0.8 | | | | 14.0 | 25.3 | | | | | | | | | | ⊚ | ⊚ |
| Ex. 26 | 30.5 | 51.0 | 18.4 | 0.0 | 0.0 | 0.0 | 0.0 | | | | | | | | | | | | | | | ⊚ | ⊚ |
| Ex. 27 | 36.1 | 36.2 | 23.5 | | | 0.0 | 4.1 | | 0.3 | 2.7 | 6.0 | 13.0 | | | | | | | | | | ⊚ | ⊚ |
| Ex. 28 | 32.9 | 34.9 | 23.7 | | | 0.1 | 8.3 | | 0.4 | 2.3 | 3.5 | 9.9 | | | | | | | | | | ⊚ | ⊚ |
| Ex. 29 | 31.7 | 44.8 | 23.4 | | 0.0 | 0.0 | | | 0.2 | 1.3 | 1.9 | 2.1 | | | | | | | | | | ⊚ | ⊚ |
| Ex. 30 | 31.1 | 45.2 | 23.7 | | | 0.0 | | | | | 1.6 | 2.3 | | | | | | | | | | ⊚ | ⊚ |
| Ex. 31 | 36.7 | 38.8 | 24.5 | | | 0.0 | | | | | 2.4 | 3.8 | | | | | | | | | | ⊚ | ⊚ |
| Ex. 32 | 16.1 | 63.5 | 20.3 | 0.0 | 0.0 | 0.0 | 0.0 | | | | | | | | | | | | | | | ⊚ | ⊚ |

**Table 1-3**

| | Composition (wt%) | | | | | | | Heat shrinkage (%): each temperature × 8hr | | | | | Solubility (ng/cm2·h) | | Solubility after heating at 1400°C (ng/cm2·h) | | Alumina resistance reactivity | | | | Average fiber diameter (*µ*m) | Fibrillization facility | Fiber state |
|---|---|---|---|---|---|---|---|---|---|---|---|---|---|---|---|---|---|---|---|---|---|---|---|
| | SiO₂ | Al₂O₃ | Na₂O | MgO | CaO | Fe₂O₃ | ZrO₂ | 600°C | 800°C | 1000°C | 1200°C | 1400°C | PH4.5 | PH7.4 | PH4.5 | PH7.4 | 600°C | 1000°C | 1200°C | 1400°C | | | |
| Ex. 33 | 42.6 | 37.2 | 20.2 | | 0.0 | 0.0 | 0.0 | | | 14.6 | | 22.2 | | | | | | | | | | ⊚ | ⊚ |
| Ex. 34 | 29.6 | 50.4 | 19.9 | 0.0 | 0.0 | 0.0 | 0.0 | | 0.7 | 9.5 | 11.2 | 12.4 | | | | | | | | | | ⊚ | ⊚ |
| Ex. 35 | 36.7 | 37.9 | 25.4 | | | | | | 0.9 | 1.2 | 10.5 | 16.9 | 8691 | 2376 | | | ○ | ○ | ○ | ○ | 6.4 | ⊚ | ⊚ |
| Ex. 36 | 32.7 | 43.3 | 23.9 | | | 0.1 | | | 0.6 | 1.1 | 1.4 | 2.0 | | | | | | | | | | ⊚ | ⊚ |
| Ex. 37 | 36.1 | 39.5 | 24.3 | | | 0.1 | | | 0.9 | 0.8 | 1.1 | 1.1 | 5102 | 2579 | 8427 | 2581 | ○ | ○ | ○ | ○ | 6.1 | ⊚ | ⊚ |
| Ex. 38 | 37.4 | 37.8 | 24.7 | | | 0.0 | | | 0.4 | 0.8 | 1.4 | 6.5 | 4724 | 2473 | 5205 | 2323 | ○ | ○ | ○ | ○ | 5.9 | ⊚ | ⊚ |
| Ex. 39 | 17.6 | 61.3 | 21.0 | 0.0 | 0.0 | 0.0 | 0.0 | | | | | | | | | | | | | | | ⊚ | ⊚ |
| Ex. 40 | 44.4 | 43.8 | 11.8 | | 0.0 | 0.0 | 0.0 | | | 14.8 | | 33.8 | | | | | | | | | | ⊚ | ⊚ |
| Ex. 41 | 46.0 | 43.6 | 10.4 | | 0.0 | 0.0 | 0.0 | | | | | | | | | | | | | | | ⊚ | ⊚ |
| Ex. 42 | 38.4 | 42.0 | 19.6 | 0.0 | | 0.0 | | | | | 7.1 | 13.3 | | | | | | | | | | ⊚ | ⊚ |
| Ex. 43 | 35.8 | 41.2 | 22.9 | | | 0.1 | | | 0.0 | 1.8 | 1.8 | 2.2 | 4780 | 1987 | 5292 | 1813 | ○ | ○ | ○ | ○ | 4.3 | ⊚ | ⊚ |
| Ex. 44 | 36.0 | 40.5 | 23.4 | | | 0.0 | | | 0.0 | 1.4 | 1.6 | 2.1 | | | | | | | | | | ⊚ | ⊚ |
| Ex. 45 | 38.2 | 41.4 | 20.4 | 0.0 | 0.0 | 0.0 | 0.0 | | | | | | | | | | | | | | | ⊚ | ⊚ |
| Ex. 46 | 24.6 | 39.0 | 19.8 | | 0.1 | 0.11 | 15.9 | | | | 2.3 | 3.1 | | | | | | | | | | ⊚ | ⊚ |
| Ex. 47 | 41.5 | 36.6 | 21.8 | | 0.0 | 0.0 | 0.0 | | | | | | | | | | | | | | | ⊚ | ⊚ |
| Ex. 48 | 34.7 | 41.9 | | | 0.0 | 0.0 | | | | | 1.8 | 2.6 | | | | | | | | | | ⊚ | ⊚ |

**Table 1-4**

| | Composition (wt%) | | | | | | | Heat shrinkage (%): each temperature × 8hr | | | | | Solubility (ng/cm2·h) | | Solubility after heating at 1400°C (ng/cm2·h) | | Alumina resistance reactivity | | | | Average fiber diameter (*µ*m) | Fibrillization property | Fiber state |
|---|---|---|---|---|---|---|---|---|---|---|---|---|---|---|---|---|---|---|---|---|---|---|---|
| | SiO₂ | Al₂O₃ | Na₂O | MgO | CaO | Fe₂O₃ | ZrO₂ | 600°C | 800°C | 1000°C | 1200°C | 1400°C | PH4.5 | PH7.4 | PH4.5 | PH7.4 | 600°C | 1000°C | 1200°C | 1400°C | | | |
| Ex. 49 | 38.4 | 41.5 | 20.0 | 0.0 | 0.0 | 0.0 | 0.0 | | | | | | | | | | | | | | | ⊚ | ⊚ |
| Ex. 50 | 38.2 | 42.2 | 19.5 | 0.0 | | 0.0 | | | | | 7.7 | 14.4 | | | | | | | | | | ⊚ | ⊚ |
| Ex. 51 | 41.1 | 36.7 | 22.2 | | 0.0 | 0.0 | 0.0 | | | 5.3 | | 3.3 | | | | | | | | | | ⊚ | ⊚ |
| Ex. 52 | 24.1 | 51.0 | 24.8 | | | 0.1 | | | | | | 2.2 | | | | | | | | | | ⊚ | ⊚ |
| Ex. 53 | 23.7 | 52.0 | 23.9 | 0.3 | | 0.0 | | | | | | 2.2 | | | | | | | | | | ⊚ | ⊚ |
| Ex. 54 | 17.5 | 61.3 | 21.2 | | 0.0 | 0.0 | 0.0 | | | 2.9 | | 5.9 | | | | | | | | | | ⊚ | ⊚ |
| Ex. 55 | 38.0 | 41.9 | 20.0 | 0.0 | 0.0 | 0.0 | 0.0 | | 0.6 | 5.5 | 5.4 | 23.2 | | | | | | | | | | ⊚ | ⊚ |
| Ex. 56 | 24.6 | 39.9 | 19.3 | | | 0.0 | 16.1 | | | | 2.4 | 2.6 | | | | | | | | | 2.8 | ⊚ | ⊚ |
| Ex. 57 | 30.9 | 45.4 | 23.7 | | | 0.0 | | | 0.0 | 0.7 | 0.8 | 1.5 | | | | | | | | | | ⊚ | ⊚ |
| Ex. 58 | 40.3 | 37.2 | 22.5 | | 0.0 | 0.0 | 0.0 | | | 2.8 | | 3.6 | | | | | | | | | | ⊚ | ⊚ |
| Ex. 59 | 39.1 | 38.3 | 22.5 | | 0.0 | 0.0 | 0.0 | | | 3.2 | | 4.5 | | | | | | | | | | ⊚ | ⊚ |
| Ex. 60 | 31.5 | 47.1 | 21.2 | 0.0 | 0.0 | 0.0 | 0.0 | | | | | | | | | | | | | | | ⊚ | ⊚ |
| Ex. 61 | 30.2 | 48.4 | 21.3 | 0.0 | 0.0 | 0.0 | 0.0 | | | | | | | | | | | | | | | ⊚ | ⊚ |
| Ex. 62 | 16.5 | 62.8 | 20.7 | | 0.0 | 0.0 | 0.0 | | | | | | | | | | | | | | | ⊚ | ⊚ |
| Ex. 63 | 15.7 | 63.4 | 20.9 | | 0.0 | 0.0 | 0.0 | 0.2 | 0.8 | 1.8 | 2.6 | 5.5 | 1557 | 543 | 1764 | 1004 | ○ | ○ | ○ | ○ | 1.8 | ⊚ | ⊚ |

**Table 1-5**

| | Composition (wt%) | | | | | | | Heat shrinkage (%): each temperature × 8hr | | | | | Solubility (ng/cm2·h) | | Solubility after heating at 1400°C (ng/cm2·h) | | Alumina resistance reactivity | | | | Average fiber diameter (*µ*m) | Scutching property | Fiber state |
|---|---|---|---|---|---|---|---|---|---|---|---|---|---|---|---|---|---|---|---|---|---|---|---|
| | SiO₂ | Al₂O₃ | Na₂O | MgO | CaO | Fe₂O₃ | ZrO₂ | 600°C | 800° | 1000°C | 1200°C | 1400°C | PH4.5 | PH7.4 | PH4.5 | PH7.4 | 600°C | 1000°C | 1200°C | 1400°C | | | |
| Ex. 64 | 32.1 | 49.1 | 18.7 | | | | | | | | 18.1 | 23.1 | | | | | | | | | | ⊚ | ⊚ |
| Ex. 65 | 35.4 | 44.7 | 19.8 | 0.0 | 0.0 | 0.0 | 0.0 | | | | | | | | | | | | | | | ⊚ | ⊚ |
| Ex. 66 | 38.8 | 41.3 | 19.8 | 0.0 | | 0.0 | | | | | 7.5 | 14.7 | | | | | | | | | | ⊚ | ⊚ |
| Ex. 67 | 24.6 | 50.5 | 24.1 | 0.6 | | 0.1 | | | | | | 2.1 | | | | | | | | | | ⊚ | ⊚ |
| Ex. 68 | 34.8 | 39.9 | 25.3 | 0.0 | 0.0 | 0.0 | 0.0 | | | | 1.3 | 1.6 | | | | | | | | | | ⊚ | ⊚ |
| Ex. 69 | 21.8 | 53.9 | 24.2 | 0.0 | 0.0 | 0.0 | 0.0 | | 0.2 | 1.1 | 1.2 | 3.1 | 4109 | 2129 | | | ○ | ○ | ○ | ○ | 3.3 | ⊚ | ⊚ |
| Ex. 70 | 41.6 | 37.5 | 20.9 | | | | | | | | 10.2 | 42.5 | | | | | | | | | | ⊚ | ⊚ |
| Ex. 71 | 41.4 | 36.9 | 21.5 | | 0.1 | 0.0 | | | | | | | | | | | | | | | | ⊚ | ⊚ |
| Ex. 72 | 37.7 | 40.0 | 22.1 | | 0.0 | 0.0 | | | 0.7 | 4.6 | 4.2 | 5.2 | 6391 | 2597 | | | ○ | ○ | ○ | ○ | 5.1 | ⊚ | ⊚ |
| Ex. 73 | 26.6 | 47.9 | 25.5 | 0.0 | 0.0 | 0.0 | 0.0 | | | | | 2.1 | | | | | | | | | | ⊚ | ⊚ |
| Ex. 74 | 22.2 | 53.2 | 24.6 | 0.0 | 0.0 | 0.0 | 0.0 | | | | | | | | | | | | | | | ⊚ | ⊚ |
| Ex. 75 | 26.5 | 41.5 | 21.7 | | | 0.1 | 10.3 | | | | 2.3 | 2.7 | 2229 | 660 | | | ○ | ○ | ○ | ○ | 2.9 | ⊚ | ⊚ |
| Ex. 76 | 25.6 | 53.6 | 20.7 | | 0.0 | 0.0 | 0.0 | | | 9.4 | | 12.6 | | | | | | | | | | ⊚ | ⊚ |
| Ex. 77 | 24.8 | 54.3 | 21.0 | | 0.0 | 0.0 | 0.0 | | | | | | | | | | | | | | | ⊚ | ⊚ |
| Ex. 78 | 29.2 | 48.0 | 22.0 | | | 0.0 | 0.8 | | | | | | | | | | | | | | | ⊚ | ⊚ |
| Ex. 79 | 28.8 | 45.3 | 24.1 | | | 0.0 | 1.7 | | | | 1.6 | 2.6 | | | | | | | | | | ⊚ | ⊚ |

**Table 1-6**

| | Composition (wt%) | | | | | | | Heat shrinkage (%): each temperature × 8hr | | | | | Solubility (ng/cm2·h) | | Solubility after heating at 1400°C (ng/cm2·h) | | Alumina resistance reactivity | | | | Average fiber diameter (*µ*m) | Scutching property | Fiber state |
|---|---|---|---|---|---|---|---|---|---|---|---|---|---|---|---|---|---|---|---|---|---|---|---|
| | SiO₂ | Al₂O₃ | Na₂O | MgO | CaO | Fe₂O₃ | ZrO₂ | 600°C | 800°C | 1000°C | 1200°C | 1400°C | PH4.5 | PH7.4 | PH4.5 | PH7.4 | 600°C | 1000°C | 12000°C | 1400°C | | | |
| Ex. 80 | 37.9 | 37.3 | 24.6 | | | 0.1 | 0.0 | | 1.0 | 1.7 | 6.1 | 9.8 | | | | | | | | | | ⊚ | ⊚ |
| Ex. 81 | 19.0 | 55.6 | 25.2 | | | | | | | | 1.6 | 3.8 | | | | | | | | | | ⊚ | ⊚ |
| Ex. 82 | 18.4 | 55.7 | 25.8 | | | | | | | | | 3.8 | | | | | | | | | | ⊚ | ⊚ |
| Ex. 83 | 29.2 | 44.4 | 25.2 | 1.1 | | 0.0 | | | | | | 2.1 | | | | | | | | | | ⊚ | ⊚ |
| Ex. 84 | 28.7 | 45.0 | 23.4 | | | 0.0 | 2.9 | | | | 2.0 | 2.6 | | | | | | | | | | ⊚ | ⊚ |
| Ex. 85 | 36.1 | 38.5 | 23.0 | | | 0.0 | 2.2 | | 0.1 | 3.0 | 2.5 | 2.8 | | | | | | | | | | ⊚ | ⊚ |
| Ex. 86 | 38.2 | 34.8 | 26.8 | | | 0.1 | | | | | | | | | | | | | | | | ⊚ | ⊚ |
| Ex. 87 | 29.8 | 48.2 | 22.0 | | 0.0 | 0.0 | 0.0 | | | 8.4 | | 9.7 | | | | | | | | | | ⊚ | ⊚ |
| Ex. 88 | 23.7 | 50.0 | 23.2 | 3.0 | | 0.1 | | | | | | 1.9 | | | | | | | | | | ⊚ | ⊚ |
| Ex. 89 | 22.8 | 49.5 | 23.5 | 4.0 | 0.1 | 0.1 | | | | | | 2.1 | 1770 | 547 | | | ○ | ○ | ○ | ○ | 2.2 | ⊚ | ⊚ |
| Ex. 90 | 22.6 | 48.6 | 22.9 | 5.5 | 0.2 | 0.1 | | | | | | | | | | | | | | | | ⊚ | ⊚ |
| Ex. 91 | 21.3 | 53.6 | 25.1 | 0.0 | 0.0 | 0.0 | 0.0 | | | | | | | | | | | | | | | ⊚ | ⊚ |
| Ex. 92 | 33.8 | 40.7 | 25.5 | 0.0 | 00 | 0.0 | 0.0 | | 0.9 | 0.9 | 1.2 | 2.0 | | | | | | | | | | ⊚ | ⊚ |
| Ex. 93 | 28.2 | 50.1 | 21.7 | | 0.0 | 0.0 | 0.0 | | | 10.1 | | 11.4 | | | | | | | | | | ⊚ | ⊚ |
| Ex. 94 | 25.9 | 52.2 | 21.9 | | 0.0 | 0.0 | 0.0 | 0.3 | 0.4 | 10.5 | 8.7 | 13.0 | 2762 | 1037 | 3637 | 1554 | ○ | ○ | ○ | ○ | 2.8 | ⊚ | ⊚ |

**Table 1-7**

| | Composition (wt%) | | | | | | | Heat shrinkage (%) each temperature × 8hr | | | | | Solubility (ng/cm2·h) | | Solubility after heating at 1400°C (ng/cm2·h) | | Alumina resistance reactivity | | | | Average fiber diameter (*µ*m) | Fibrillization facility | Fiber state |
|---|---|---|---|---|---|---|---|---|---|---|---|---|---|---|---|---|---|---|---|---|---|---|---|
| | SiO₂ | Al₂O₃ | Na₂O | MgO | CaO | Fe₂O₃ | ZrO₂ | 600°C | 800°C | 1000°C | 1200°C | 1400°C | PH4.5 | PH7.4 | PH4.5 | PH7.4 | 600°C | 11000°C | 1200°C | 1400°C | | | |
| Ex. 95 | 38.3 | 41.3 | 19.9 | | | 0.1 | 0.4 | | | | 6.4 | 9.2 | | | | | | | | | | ⊚ | ⊚ |
| Ex. 96 | 29.6 | 44.2 | 24.6 | 1.4 | | 0.1 | | | | | | 1.7 | 4043 | 991 | | | ○ | ○ | ○ | ○ | 4.2 | ⊚ | ⊚ |
| Ex. 97 | 29.6 | 44.2 | 24.4 | 1.7 | | 0.1 | | | | | | 2.4 | | | | | | | | | | ⊚ | ⊚ |
| Ex. 98 | 31.5 | 42.4 | 26.1 | 0.0 | 0.0 | .0 | 0.0 | | | | 0.6 | 2.0 | | | | | | | | | | ⊚ | ⊚ |
| Ex. 99 | 23.8 | 50.9 | 24.6 | 0.6 | | 0.0 | | | | | | 2.3 | | | | | | | | | | ⊚ | ⊚ |
| Ex. 100 | 31.9 | 45.8 | 22.1 | | 0.0 | 0.0 | | | 0.7 | 2.7 | 2.5 | 3.9 | | | | | | | | | | ⊚ | ⊚ |
| Ex. 101 | 29.1 | 48.7 | 22.2 | | 0.0 | 0.0 | | | | | 2.3 | 3.2 | | | | | ○ | ○ | ○ | ○ | 45 | ⊚ | ⊚ |
| Ex. 102 | 44.5 | 42.4 | 13.1 | | 0.0 | 0.0 | 0.0 | | | | | | | | | | | | | | | ⊚ | ⊚ |
| Ex. 103 | 25.3 | 52.1 | 22.5 | | 0.0 | 0.1 | | | | | 2.1 | 3.3 | | | | | | | | | | ⊚ | ⊚ |
| Ex. 104 | 22.9 | 54.2 | 22.8 | | 0.0 | 0.0 | | | | | 2.6 | 5.0 | | | | | | | | | | ⊚ | ⊚ |
| Ex. 105 | 27.3 | 49.8 | 22.7 | 0.0 | 0.0 | 0.0 | 0.0 | | | | 1.8 | 3.6 | | | | | | | | | | ⊚ | ⊚ |
| Ex. 106 | 21.6 | 55.2 | 23.3 | | | | | | | | | 3.5 | | | | | | | | | | ⊚ | ⊚ |
| Ex. 107 | 18.9 | 60.3 | 20.9 | | 0.0 | 0.0 | 0.0 | | | 3.0 | | 4.8 | | | | | | | | | | ⊚ | ⊚ |
| Ex. 108 | 22.3 | 54.5 | 23.1 | | | 0.0 | | | | | | | | | | | | | | | | ⊚ | ⊚ |
| Ex. 109 | 31.4 | 50.4 | 18.1 | 0.0 | 0.0 | 0.0 | 0.0 | | | | | | | | | | | | | | | ⊚ | ⊚ |
| Ex. 110 | 30.9 | 51.1 | 17.9 | 0.0 | 0.0 | 0.0 | 0.0 | | | | | | | | | | | | | | | ⊚ | ⊚ |

**Table 1-8**

| | Composition (wt%) | | | | | | | Heat shrinkage (%): each temperature x 8hr | | | | | Solubility (ng/cm2·h) | | Solubility after heating at 1400°C (ng/cm2·h) | | Alumina resistance reactivity | | | | Average fiber diameter (*µ*m) | Fibrillization facility | Fiber state |
|---|---|---|---|---|---|---|---|---|---|---|---|---|---|---|---|---|---|---|---|---|---|---|---|
| | SiO₂ | AL₂O₃ | Al₂O₃ | MgO | CaO | Fe₂O₃ | ZrO₂ | 600°C | 800°C | 1000°C | 1200°C | 1400°C | PH4.5 | PH7.4 | PH4.5 | PH7.4 | 600°C | 1000°C | 1200°C | 1400°C | | | |
| Ex. 111 | 44.5 | 42.7 | 12.8 | | 0.0 | 0.0 | 0.0 | | | | | | | | | | | | | | | ⊚ | ⊚ |
| Ex. 112 | 27.5 | 49.2 | 23.2 | 0.0 | 0.0 | 0.1 | 0.0 | | | | 1.7 | 2.9 | | | | | | | | | | ⊚ | ⊚ |
| Ex. 113 | 32.3 | 44.0 | 23.6 | 0.0 | 0.0 | 0.0 | 0.0 | | | | 1.0 | 2.4 | | | | | | | | | | ⊚ | ⊚ |
| Ex. 114 | 30.0 | 46.6 | 23.3 | | | 0.0 | | | 0.0 | 1.6 | 1.7 | 1.9 | | | | | | | | | | ⊚ | ⊚ |
| Ex. 115 | 29.6 | 46.9 | 23.5 | | | 0.1 | | | 0.1 | 1.7 | 2.4 | 3.0 | | | | | | | | | | ⊚ | ⊚ |
| Ex. 116 | 30.5 | 44.5 | 24.9 | | | 0.0 | | | 0.0 | 0.7 | 1.2 | 1.4 | | | | | | | | | | ⊚ | ⊚ |
| Ex. 117 | 18.8 | 55.8 | 25.3 | | | | | | | | 1.5 | 3.1 | | | | | | | | | | ⊚ | ⊚ |
| Ex. 118 | 23.0 | 51.7 | 24.5 | 0.6 | | 0.1 | | | | | | 1.7 | | | | | | | | | | ⊚ | ⊚ |
| Ex. 119 | 22.4 | 54.6 | 22.9 | | | | | | | | | | | | | | | | | | | ⊚ | ⊚ |
| Ex. 120 | 42.2 | 48.3 | 9.4 | 0.0 | 0.1 | 0.0 | 0.0 | | | | | | | | | | | | | | | ⊚ | ⊚ |
| Ex. 121 | 32.8 | 49.7 | 17.5 | 0.0 | 0.0 | 0.0 | 0.0 | | | | | | | | | | | | | | | ⊚ | ⊚ |
| Ex. 122 | 23.4 | 51.4 | 24.0 | 1.1 | | 0.1 | | | | | | 2.4 | | | | | | | | | | ⊚ | ⊚ |
| Ex. 123 | 29.0 | 48.2 | 22.7 | | | 0.0 | | | 0.1 | 2.3 | 2.4 | 2.9 | | | | | | | | | 3.2 | ⊚ | ⊚ |
| Ex. 124 | 36.5 | 42.3 | 21.2 | | 0.0 | 0.0 | 0.0 | | | 5.4 | | 5.4 | | | | | | | | | | ⊚ | ⊚ |
| Ex. 125 | 22.1 | 48.3 | 22.6 | 6.7 | 0.2 | 0.1 | | | | | | 2.6 | 2121 | 725 | | | ○ | ○ | ○ | ○ | 2.4 | ⊚ | ⊚ |
| Ex. 126 | 17.7 | 56.9 | 25.2 | 0.0 | 0.0 | 0.0 | 0.0 | | | | | 3.1 | | | | | | | | | | ⊚ | ⊚ |

**Table 1-9**

| | Composition (wt%) | | | | | | | Heat shrinkage (%): each temperature × 8hr | | | | | Solubility (ng/cm2·h) | | Solubility after heating at 1400°C (ng/cm2·h) | | Alumina resistance reactivity | | | | Average fiber diameter (*µ*m) | Fibrillization facility | Fiber state |
|---|---|---|---|---|---|---|---|---|---|---|---|---|---|---|---|---|---|---|---|---|---|---|---|
| | SiO₂ | Al₂O₃ | Na₂O | MgO | CaO | Fe₂O₃ | ZrO₂ | 600°C | 800°C | 1000°C | 1200°C | 1400°C | PH4.5 | PH7.4 | PH4.5 | PH7.4 | 600°C | 1000°C | 1200°C | 1400°C | | | |
| Ex. 127 | 23.1 | 51.0 | 24.4 | 1.5 | | 0.1 | | | | | | 2.2 | 3081 | 1100 | | | ○ | ○ | ○ | ○ | 3.6 | ⊚ | ⊚ |
| Ex. 128 | 23.1 | 50.7 | 24.2 | 1.9 | | 0.1 | | | | | | 1.6 | | | | | | | | | | ⊚ | ⊚ |
| Ex. 129 | 31.5 | 42.4 | 26.1 | | | | | | 0.7 | 0.6 | 0.9 | 2.1 | 5865 | 22236 | | | ○ | ○ | ○ | ○ | 4.1 | ⊚ | ⊚ |
| Ex. 130 | 31.1 | 45.1 | 23.7 | | | 0.0 | | | 0.3 | 1.1 | 1.4 | 1.7 | 3208 | 1739 | 3078 | 1149 | ○ | ○ | ○ | ○ | 3.1 | ⊚ | ⊚ |
| Ex. 131 | 30.6 | 44.9 | 24.4 | | | 0.1 | | | 0.0 | 1.2 | 1.5 | 1.9 | | | | | | | | | | ⊚ | ⊚ |
| Ex. 132 | 18.6 | 54.3 | 26.0 | 0.0 | 0.8 | 0.0 | 0.0 | | 0.6 | 1.0 | 1.7 | 3.5 | | | | | | | | | | ⊚ | ⊚ |
| Ex. 133 | 44.3 | 36.7 | 18.9 | | | | | | | | 29.0 | | | | | | | | | | | ⊚ | ⊚ |
| Ex. 134 | 41.7 | 37.0 | 21.1 | | 0.0 | 0.0 | | | | | | | | | | | | | | | | ⊚ | ⊚ |
| Ex. 135 | 40.9 | 37.0 | 22.1 | | | 0.0 | | | | | 11.4 | 20.8 | | | | | | | | | | ⊚ | ⊚ |
| Ex. 136 | 33.9 | 42.4 | 23.7 | 0.0 | 0.0 | 0.0 | 0.0 | | | | 1.1 | 2.4 | | | | | | | | | | ⊚ | ⊚ |
| Ex. 137 | 22.4 | 54.6 | 22.9 | | 0.0 | 0.1 | | | | | 2.0 | 3.8 | 3727 | 2280 | | | ○ | ○ | ○ | ○ | 3.8 | ⊚ | ⊚ |
| Ex. 138 | 35.8 | 40.5 | 23.5 | | | 0.1 | 0.0 | | | | | | | | | | | | | | | ⊚ | ⊚ |
| Ex. 139 | 35.4 | 40.5 | 24.0 | | | | 0.2 | | 0.1 | 1.5 | 1.6 | 2.0 | | | | | | | | | | ⊚ | ⊚ |
| Ex. 140 | 33.1 | 42.5 | 24.4 | | | 0.0 | | | 0.8 | 0.9 | 0.9 | 1.7 | 5809 | 2134 | | | ○ | ○ | ○ | ○ | 4.0 | ⊚ | ⊚ |
| Ex. 141 | 34.8 | 40.4 | 24.7 | 0.0 | 0.0 | 0.0 | 0.0 | | | | 1.0 | 1.6 | | | | | | | | | | ⊚ | ⊚ |
| Ex. 142 | 27.8 | 44.6 | 23.3 | | | 0.1 | 4.2 | | | | 2.1 | 2.8 | 4789 | 1306 | | | ○ | ○ | ○ | ○ | 3.6 | ⊚ | ⊚ |

**Table 1-10**

| | Composition (wt%) | | | | | | | Heat shrinkage (%): each temperature × 8hr | | | | | Solubility (ng/cm2·h) | | Solubility after heating at 1400°C (ng/cm2·h) | | Alumina resistance reactivity | | | | Average fiber diameter (*µ*m) | Fibrillization facility | Fiber state |
|---|---|---|---|---|---|---|---|---|---|---|---|---|---|---|---|---|---|---|---|---|---|---|---|
| | SiO₂ | Al₂O₃ | Na₂O | MgO | CaO | Fe₂O₃ | ZrO₂ | 600°C | 800°C | 1000°C | 1200°C | 1400°C | PH4.5 | PH7.4 | PH4.5 | PH7.4 | 600°C | 1000°C | 1200°C | 1400°C | | | |
| Ex. 143 | 43.1 | 44.4 | 12.5 | | 0.0 | 0.0 | 0.0 | | | 15.4 | | 31.5 | | | | | | | | | | ⊚ | ⊚ |
| Ex. 144 | 22.5 | 55.0 | 22.3 | | | 0.0 | | | | | | | | | | | | | | | | ⊚ | ⊚ |
| Ex. 145 | 37.2 | 38.3 | 24.4 | | | 0.0 | | | 0.3 | 1.0 | 1.4 | 5.1 | | | | | | | | | | ⊚ | ⊚ |
| Ex. 146 | 36.6 | 39.4 | 23.9 | | | 0.0 | | | | 1.9 | 3.5 | 3.8 | | | | | | | | | | ⊚ | ⊚ |
| Ex. 147 | 21.1 | 58.1 | 20.8 | 0.0 | 0.0 | 0.0 | 0.0 | | | | | | | | | | | | | | | ⊚ | ⊚ |
| Ex. 148 | 21.0 | 58.9 | 20.1 | 0.0 | 0.0 | 0.0 | 0.0 | | | | | | | | | | | | | | | ⊚ | ⊚ |
| Ex. 149 | 37.7 | 40.4 | 21.9 | | 0.0 | 0.0 | 0.0 | | | 4.3 | | 5.6 | | | | | | | | | | ⊚ | ⊚ |
| Ex. 150 | 29.4 | 44.0 | 23.7 | 2.7 | | 0.1 | | | | | | 2.5 | | | | | | | | | | ⊚ | ⊚ |
| Ex. 151 | 27.3 | 47.6 | 23.1 | 1.9 | | 0.1 | | | | | | 2.0 | | | | | | | | | | ⊚ | ⊚ |
| Ex. 152 | 31.3 | 43.8 | 24.8 | | | | | | 0.5 | 0.7 | 0.8 | 1.2 | | | | | | | | | 5.2 | ⊚ | @ |
| Ex. 153 | 31.4 | 44.1 | 24.5 | | | 0.0 | | | 0.3 | 1.0 | 1.1 | 1.6 | | | | | | | | | 3.8 | ⊚ | ⊚ |
| Ex. 154 | 37.2 | 37.3 | 25.5 | 0.0 | 0.0 | 0.0 | 0.0 | | | | | | | | | | | | | | | ⊚ | ⊚ |
| Ex. 155 | 25.5 | 49.5 | 23.7 | 1.2 | | 0.1 | | | | | | 3.7 | | | | | | | | | | ⊚ | ⊚ |
| Ex. 156 | 18.6 | 61.1 | 20.2 | 0.0 | 0.0 | 0.0 | 0.0 | | | | | | | | | | | | | | | ⊚ | ⊚ |
| Ex. 157 | 16.6 | 63.6 | 19.7 | 0.0 | 0.0 | 0.0 | 0.0 | | | | | | | | | | | | | | | ⊚ | ⊚ |

**Table 1-11**

| | Composition (wt%) | | | | | | | Heat shrinkage (%): each temperature × 8hr | | | | | Solubility (ng/cm2·h) | | Solubility after heating at 1400°C (ng/cm2·h) | | Alumina resistance reactivity | | | | Average fiber diameter (*µ*m) | Fibrillization facility | Fiber state |
|---|---|---|---|---|---|---|---|---|---|---|---|---|---|---|---|---|---|---|---|---|---|---|---|
| | SiO₂ | Al₂O₃ | Na₂O | MgO | CaO | Fe₂O₃ | ZrO₂ | 600°C | 800°C | 1000°C | 1200°C | 1400°C | PH4.5 | PH7.4 | PH4.5 | PH7.4 | 600°C | 1000°C | 1200°C | 1400°C | | | |
| Ex. 158 | 27.2 | 52.2 | 20.6 | | 0.0 | 0.0 | 0.0 | | | 10.8 | | 13.1 | | | | | | | | | | ⊚ | ⊚ |
| Ex. 159 | 32.2 | 43.2 | 24.5 | | | 0.0 | | | 0.0 | 0.7 | 0.9 | 1.3 | 4403 | 2115 | 6372 | 2139 | ○ | ○ | ○ | ○ | 3.9 | ⊚ | ⊚ |
| Ex. 160 | 37.0 | 38.2 | 24.8 | 0.0 | 0.0 | 0.0 | 0.0 | | | | 7.3 | | | | | | | | | | | ⊚ | ⊚ |
| Ex. 161 | 44.4 | 43.5 | 12.1 | | 0.0 | 0.0 | 0.0 | | | | | 12.0 | | | | | | | | | | ⊚ | ⊚ |
| Ex. 162 | 37.5 | 37.0 | 25.4 | 0.0 | 0.0 | 0.0 | 0.0 | | | | | | | | | | | | | | | ⊚ | ⊚ |
| Ex. 163 | 36.2 | 39.1 | 24.6 | | | 0.0 | | | | | 1.8 | 6.0 | | | | | | | | | | ⊚ | ⊚ |
| Ex. 164 | 35.0 | 40.2 | 24.7 | | | 0.0 | 0.0 | | | | 1.5 | 2.8 | | | | | | | | | | ⊚ | ⊚ |
| Ex. 165 | 38.8 | 35.7 | 25.4 | | 0.0 | 0.0 | | | | | | | | | | | | | | | | ⊚ | ⊚ |
| Ex. 166 | 33.0 | 43.2 | 23.8 | | 0.0 | 0.0 | | | | | 1.9 | 2.8 | | | | | | | | | | ⊚ | ⊚ |
| Ex. 167 | 23.1 | 56.5 | 20.4 | 0.0 | 0.0 | 0.0 | 0.0 | | | | | | 6268 | | 8853 | | | | | | | ⊚ | ⊚ |
| Ex. 168 | 33.4 | 45.0 | 21.6 | | 0.0 | 0.0 | 0.0 | 0.2 | 0.3 | 5.9 | 4.4 | 6.7 | | 2563 | | 1636 | ○ | ○ | ○ | ○ | 4.0 | ⊚ | ⊚ |
| Ex. 169 | 27.4 | 43.6 | 22.0 | | | 0.1 | 6.9 | | | | 2.1 | 2.8 | | | | | | | | | | ⊚ | ⊚ |
| Ex. 170 | 35.8 | 38.5 | 25.5 | 0.0 | 0.0 | 0.0 | 0.0 | | | | 4.6 | 7.4 | | | | | | | | | | ⊚ | ⊚ |
| Ex. 171 | 38.0 | 36.0 | 25.9 | | | 0.0 | | | | | | | | | | | | | | | | ⊚ | ⊚ |
| Ex. 172 | 29.3 | 47.0 | 23.4 | | | 0.1 | 0.2 | | | | 1.6 | 2.5 | 4408 | 1697 | | | ○ | ○ | ○ | ○ | 3.5 | ⊚ | ⊚ |
| Ex. 173 | 16.3 | 63.5 | 20.1 | | | | | | 0.0 | 2.2 | 3.1 | 5.5 | 2576 | 889 | | | ○ | ○ | ○ | ○ | 2.3 | ⊚ | ⊚ |

**Table 1-12**

| | Composition (wt%) | | | | | | | Heat shrinkage (%): each temperature × 8hr | | | | | Solubility (ng/cm2·h) | | Solubility after heating at 1400°C (ng/cm2·h) | | Alumina resistance reactivity | | | | Average fiber diameter (*µ*m) | Fibrillization facility | Fiber state |
|---|---|---|---|---|---|---|---|---|---|---|---|---|---|---|---|---|---|---|---|---|---|---|---|
| | SiO₂ | Al₂O₃ | Na₂O | MgO | CaO | Fe₂O₃ | ZrO₂ | 600°C | 800°C | 1000°C | 1200°C | 1400°C | PH4.5 | PH7.4 | PH4.5 | PH7.4 | 600°C | 1000°C | 1200°C | 1400°C | | | |
| Ex. 174 | 35.5 | 43.4 | 21.1 | 0.0 | 0.0 | 0.0 | 0.0 | | | | | | | | | | | | | | | ⊚ | ⊚ |
| Ex. 175 | 20.3 | 59.6 | 19.5 | | | | 0.6 | | | 15.8 | 3.2 | 7.0 | | | | | | | | | | ⊚ | ⊚ |
| Ex. 176 | 44.2 | 44.6 | 11.2 | | | 0.0 | 0.0 | | | 15.8 | | 44.8 | | | | | | | | | | ⊚ | ⊚ |
| Ex. 177 | 31.4 | 44.8 | 23.7 | | | 0.1 | | | | | 2.0 | 2.5 | | | | | | | | | | ⊚ | ⊚ |
| Ex. 178 | 30.7 | 44.8 | 24.3 | | | 0.0 | | | 0.6 | 1.2 | 1.6 | 2.3 | | | | | | | | | | ⊚ | ⊚ |
| Ex. 179 | 32.5 | 35.2 | 22.2 | | | 0.1 | 9.9 | | 0.2 | 1.6 | 1.6 | 2.4 | 4004 | 1793 | 4438 | 1571 | o | ○ | ○ | ○ | 4.4 | ⊚ | ⊚ |
| Ex. 180 | 21.0 | 58.5 | 20.5 | | 0.0 | 0.0 | 0.0 | | | 3.9 | | 7.3 | | | | | | | | | | ⊚ | ⊚ |
| Ex. 181 | 31.1 | 43.9 | 23.0 | | | 0.1 | | | | | | 2.5 | | | | | | | | | | ⊚ | ⊚ |
| Ex. 182 | 30.0 | 42.7 | 23.9 | 3.3 | | 0.1 | | | | | | 2.6 | 3476 | 938 | | | ○ | ○ | ○ | ○ | 3.3 | ⊚ | ⊚ |
| Ex. 183 | 35.5 | 39.5 | 24.9 | 0.0 | 0.1 | 0.0 | 0.0 | I | | | 1.3 | 4.9 | | | | | | | | | | ⊚ | ⊚ |
| Ex. 184 | 30.8 | 43.9 | 25.2 | | | | | | | | 0.5 | 1.7 | | | | | | | | | | ⊚ | ⊚ |
| Ex. 185 | 31.4 | 47.2 | 21.3 | | | | | | | | | | | | | | | | | | | ⊚ | ⊚ |
| Ex. 186 | 29.4 | 44.8 | 24.8 | 0.9 | 0.0 | 0.1 | | | | | 2.0 | | | | | | | | | | | ⊚ | ⊚ |
| Ex. 187 | 38.0 | 36.1 | 26.0 | 0.0 | | 0.0 | 0.0 | | 1.3 | 2.7 | | | | | | | | | | | | ⊚ | ⊚ |
| Ex. 188 | 31.8 | 34.1 | 19.9 | | | 0.1 | 14.1 | | | | 3.8 | 4.5 | 3010 | 1484 | 3917 | 1288 | | ○ | | ○ | 4.2 | ⊚ | ⊚ |
| Ex. 189 | 32.2 | 42.5 | 25.3 | | | 0.0 | | | 0.4 | | | 1.6 | | | | | | | | | | ⊚ | ⊚ |

**Table 1-13**

| | Composition (wt%) | | | | | | | Heat shrinkage (%): each temperature × 8hr | | | | | Solubility (ng/cm2·h) | | Solubility after heating at 1400°C (ng/cm2·h) | | Alumina resistance reactivity | | | | Average fiber diameter (*µ*m) | Fibrillization facility | Fiber state |
|---|---|---|---|---|---|---|---|---|---|---|---|---|---|---|---|---|---|---|---|---|---|---|---|
| | SiO₂ | Al₂O₃ | Na₂O | MgO | CaO | Fe₂O₃ | ZrO₂ | 600°C | 800°C | 1000°C | 1200°C | 1400°C | PH4.5 | PH7.4 | PH4.5 | PH7.4 | 600°C | 1000°C | 1200°C | 1400°C | | | |
| Ex. 190 | 20.2 | 59.1 | 20.7 | | 0.0 | 0.0 | 0.0 | | | 2.7 | | 4.2 | | | | | | | | | | ⊚ | ⊚ |
| Ex. 191 | 30.3 | 44.0 | 25.4 | 0.2 | | 0.1 | | | | | | 1.8 | | | | | | | | | | ⊚ | ⊚ |
| Ex. 192 | 30.4 | 47.8 | 21.7 | | | 0.0 | | | | | | | | | | | | | | | | ⊚ | ⊚ |
| Ex. 193 | 30.3 | 44.4 | 24.6 | 0.7 | | 0.0 | | | | | | | 5242 | 1507 | | | ○ | ○ | ○ | ○ | 3.9 | ⊚ | ⊚ |
| Ex. 194 | 29.7 | 44.5 | 25.2 | 0.4 | | 0.0 | | | | | | 2.5 | | | | | | | | | | ⊚ | ⊚ |
| Ex. 195 | 36.6 | 37.4 | 25.9 | | 0.1 | 0.0 | | | | | 7.3 | 12.8 | | | | | | | | | | ⊚ | ⊚ |
| Ex. 196 | 36.6 | 37.6 | 25.8 | | | 0.0 | | | | | 7.4 | 17.5 | | | | | | | | | | ⊚ | ⊚ |
| Com. Ex. 1 | 70.3 | 1.4 | | 0.5 | 26.8 | | | | | | | Molten | | | | | | | | | | ⊚ | ⊚ |

### Examples 197 to 216

Studies were made as follows on the fiber composition shown in Table 2.

First, the raw materials were mixed such that the composition shown in Table 2 was attained. The mixture was press-molded to obtain a molded product. The molded product was molten by heating, followed by quick quenching. The resulting product was pulverized to obtain a sample. Evaluation was conducted by using this sample by the following method. For the purpose of comparison, the fibers of Comparative Example 1 were similarly evaluated. The results are shown in Table 2.

### (Biosolubility)

1g of a sample was put in an Erlenmeyer flask (volume: 300 mL) accommodating 150 mL of physiological saline having a pH of 4.5. This flask was put in an incubator of 37°C, and horizontal vibration of 120 rpm was continued for 2.5 hours. Thereafter, the amount (mg) of each element contained in the filtrate obtained by filtration was measured by an ICP emission analyzer, and the total was taken as the amount of the eluent (mg/g of a sample).

### (Alumina reactivity)

The sample was molded to obtain a columnar sample having a diameter of about 7 mm and a thickness of about 5 mm. This columnar sample was placed on an aluminum plate, and heated at 1400°C for 8 hours. Thereafter, occurrence of adhesion or melting was observed. When the columnar sample was molten, it was evaluated as 4, when the sample was adhered, it was evaluated as 3, when the sample was not adhered with marks being left, it was evaluated as 2 and when the sample was not adhered with no marks being left was evaluated as 1.

**Table 2**

| | Composition (wt%) | | | | | | | Amount of eluent (mg/sample g) | Alumina resistance reactivity |
|---|---|---|---|---|---|---|---|---|---|
| | SiO₂ | Al₂O₃ | Na₂O | MgO | CaO | Fe₂O₃ | ZnO | pH4.5 | 1400°C-8h |
| Ex. 197 | 32.12 | 42.22 | 25.46 | | 0.14 | | 0.04 | 19.1 | 1 |
| Ex. 198 | 24.50 | 54.99 | 20.25 | 0.15 | 0.06 | | 0.04 | 14.9 | 1 |
| Ex. 199 | 12.23 | 72.14 | 15.61 | | | 0.04 | 0.02 | 15.0 | 1 |
| Ex. 200 | 5.49 | 75.32 | 18.96 | 0.18 | | 0.05 | | 2.9 | 1 |
| Ex. 201 | 9.65 | 69.70 | 20.56 | | 0.04 | 0.05 | | 3.3 | 1 |
| Ex. 202 | 15.29 | 67.10 | 17.41 | 0.11 | | 0.05 | | 2.1 | 1 |
| Ex. 203 | 19.44 | 67.24 | 13.27 | | | 0.05 | | 1.2 | 1 |
| Ex. 204 | 22.43 | 63.86 | 13.67 | | | 0.05 | | 11.6 | 1 |
| Ex. 205 | 25.94 | 54.69 | 19.24 | | 0.07 | 0.06 | | 13.5 | 1 |
| Ex. 206 | 33.93 | 43.76 | 21.93 | 0.13 | 0.17 | 0.07 | | 17.5 | 1 |
| Ex. 207 | 41.53 | 22.92 | 35.55 | | 0.00 | | | 51.1 | 4 |
| Ex. 208 | 55.54 | 12.70 | 31.41 | 0.25 | 0.10 | | | 109.2 | 4 |
| Ex. 209 | 38.32 | 15.30 | 45.91 | 0.30 | 0.17 | | | 52.8 | 4 |
| Ex. 210 | 36.36 | 27.66 | 35.89 | | 0.09 | | | 101.1 | 4 |
| Ex. 211 | 30.21 | 50.48 | 19.02 | 0.15 | 0.10 | 0.03 | | 2.8 | 1 |
| Ex. 212 | 14.90 | 67.46 | 17.59 | | 0.05 | | | 2.9 | 1 |
| Ex. 213 | 37.20 | 16.71 | 45.86 | | 0.19 | 0.04 | | 268.8 | 4 |
| Ex. 214 | 34.75 | 45.49 | 19.69 | | 0.08 | | | 3.3 | 1 |
| Ex. 215 | 14.25 | 66.26 | 19.35 | | 0.10 | 0.04 | | 8.2 | 1 |
| Ex. 216 | 30.46 | 33.23 | 35.65 | 0.20 | 0.34 | | | 122.1 | 4 |
| Com. Ex. 1 | 70.30 | 1.40 | | 0.50 | 26.76 | 26.76 | | 6.2 | 4 |

### Industrial Applicability

The inorganic fibers of the invention can be used for various purposes as a heat insulating material or a substitute for asbestos.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) on the basis of which the present application claims Paris convention priority are incorporated herein by reference in its entirety.

## Claims

1. Inorganic fibers which comprise Na₂O, SiO₂ and Al₂O₃ as main components and do not react with alumina at 600°C.

2. Inorganic fibers comprising the composition in the range surrounded by the following points A, B and C in the state diagram of Na₂O-SiO₂-Al₂O₃ shown in FIG. 1, wherein
Na₂O, SiO₂ and Al₂O₃ are contained as the main components when Na₂O, SiO₂ and Al₂O₃ are contained;
Na₂O and SiO₂ are contained as the main components when Na₂O and SiO₂ are contained and no Al₂O₃ is contained;
Na₂O and Al₂O₃ are contained as the main components when Na₂O and Al₂O₃ are contained and no SiO₂ is contained; and
Na₂O + SiO₂ + Al₂O₃ ≧ 80 wt%
Point A: (Na₂O: SiO₂: Al₂O₃ = 5:95:0)
Point B: (Na₂O: SiO₂: Al₂O₃ = 40:0:60)
Point C: (Na₂O: SiO₂: Al₂O₃ = 5:0:95).

3. Inorganic fibers having the following composition, wherein:
Na₂O, SiO₂ and Al₂O₃ are contained as the main components when Na₂O, SiO₂ and Al₂O₃ are contained;
Na₂O and Al₂O₃ are contained as the main components when Na₂O and Al₂O₃ are contained and no SiO₂ is contained; and
Na₂O and SiO₂ are contained as the main components when Na₂O and SiO₂ are contained and no Al₂O₃ is contained;
Na₂O: 5 to 50 wt%;
SiO₂: 0 to 95 wt%;
Al₂O₃: 0 to 95 wt%; and
Na₂O + SiO₂ + Al₂O₃ ≧ 80 wt%.

4. The inorganic fibers according to claim 3, which have the following composition:
Na₂O: 5 to 40 wt%;
SiO₂: 0 to 75 wt%; and
Al₂O₃: 20 to 95 wt%.

5. The inorganic fibers according to claim 3, which have the following composition:
Na₂O: 10 to 40 wt%;
SiO₂: 0 to 58 wt%; and
Al₂O₃: 32 to 90 wt%.

6. The inorganic fibers according to claim 4, which have the following composition:
Na₂O: 15 to 38 wt%;
SiO₂: 0 to 51 wt%; and
Al₂O₃: 34 to 85 wt%.

7. Inorganic fibers comprising the composition in the range surrounded by the following points D, F, C and E in the state diagram of Na₂O-SiO₂-Al₂O₃ shown in FIG. 2, wherein
Na₂O, SiO₂ and Al₂O₃ are contained as the main components when Na₂O, SiO₂ and Al₂O₃ are contained;
Na₂O and Al₂O₃ are contained as the main components when Na₂O and Al₂O₃ are contained and no SiO₂ is contained; and
Na₂O + SiO₂ + Al₂O₃ ≧ 80 wt%
Point D: (Na₂O: SiO₂: Al₂O₃ = 23:45:32)
Point F: (Na₂O: SiO₂: Al₂O₃ = 38:0:62)
Point C: (Na₂O: SiO₂: Al₂O₃ = 5:0:95)
Point E: (Na₂O: SiO₂: Al₂O₃ = 5:10:85).

8. The inorganic fibers according to any of claims 1 to 7, wherein the amount of SiO₂ is 25 wt% or less.

9. The inorganic fibers according to any of claims 1 to 7, wherein the amount of SiO₂ is 28.5 wt% to 45.0 wt%.

10. The inorganic fibers according to any of claims 1 to 9, wherein the amount of Na₂O is 15 wt% to 30 wt%.

11. The inorganic fibers according to claim 10, wherein the amount of Na₂O is 18 wt% to 28 wt%.

12. The inorganic fibers according to any of claims 1 to 11, wherein the amount of Al₂O₃ is 80 wt% or less.

13. The inorganic fibers according to claim 12, wherein the amount of Al₂O₃ is 70 wt% or less.

14. A method for producing the inorganic fibers according to any of claims 1 to 13, wherein the inorganic fibers are produced by the fusion method.
